# EUROPÄISCHE PATENTSCHRIFT

(11) **EP 1 662 630 B1**
(45) Veröffentlichungstag und Bekanntmachung des Hinweises auf die Patenterteilung: **16.01.2008**
(21) Anmeldenummer: 05025387.1
(22) Anmeldetag: 22.11.2005
(51) Int. Cl.: H02G 9/06, F16L 21/06, F16L 55/17

(54) **Verbindungsmuffe**
Connecting sleeve
Manchon de connexion

(30) Priorität: 25.11.2004 DE 102004056859
(43) Veröffentlichungstag der Anmeldung: 31.05.2006
(73) Patentinhaber: gabo Systemtechnik GmbH, 94559 Niederwinkling (DE)
(72) Erfinder: Bauer, Peter, 94357 Konzell (DE); Lederer, Roland, 94374 Schwarzach (DE); Karl, Markus, 94327 Bogen (DE)

(56) Entgegenhaltungen:
- EP-A- 0 650 007
- WO-A-20/05010422
- DE-C1- 19 849 941
- US-A- 2 424 542
- US-A1- 2004 036 291

## Beschreibung

Die Erfindung bezieht sich auf eine Verbindungsmuffe (1) für Kabelschutzrohre geringen Durchmessers, vorzugsweise für Glasfaserkabel oder dergl., bestehend aus zwei Gehäusehälften (2) innerhalb derer ein Dichtmittel (3) aus elastischem Material angeordnet ist, und die mit Hilfe von Verbindungsklammern (4) auf Schwalbenschwanz-Führungen (5) gegeneinander verspannbar sind

Solche Verbindungsmuffen sind an sich bekannt, so sind aus der DE 198 49 941 und EP 0997 678 geteilte Verbindungsmuffen aus Kunststoff für Rohre bekannt, mit denen eine zugfeste und gas- sowie wasserdichte Verbindung für Rohre hergestellt werden kann. Diese Muffen bestehen aus zwei Gehäusehälften in denen elastische Dichtmittel in Hinterschneidungen formschlüssig in den Gehäusehälften verrastet sind.

Aus der WO 00/46 537 sind geteilte Verbindungsmuffen bekannt, in deren Gehäusehälften ring- oder zackenförmige Erhebungen zum Erreichen einer bestimmten Zugfestigkeit angeordnet sind.

Darüber hinaus ist der DE 43 36 528 eine geteilte Rohrmuffe zu entnehmen, bei der im Dichtmittel entlang der Längsachse ein Wulst angeformt ist, der in einer hinterschnittenen Nut des Gehäuses der Rohrmuffe verrastet ist

Weiterhin ist aus der US 2,424,542 eine Rohrkupplung bekannt geworden, die nur für Kabel, bzw, Stahlseile größeren Durchmessers einsetzbar ist, nicht aber für Glasfaserkabel.

Schließlich zeigt auch die US 2004/0036291 A1 eine der US 2,424,542 ähnliche Rohrkupplung.

Alle diese Ausführungen haben den Nachteil, dass zum Verbinden von Rohrenden, diese während der Montage lose sind, und zur Vermeidung von Beschädigungen des im Rohr befindlichen Glasfaserkabels in der ersten Gehäusehälfte fest gehalten werden müssen, bis die zweite Gehäusehälfte aufgesetzt wird um die beiden Rohrenden zu fixieren. Bei den letzteren beiden ist dies überhaupt nicht möglich.

Der Erfindung, wie sie in den Ansprüchen beschrieben ist, liegt die Aufgabe zugrunde, die Nachteile der bisherigen Ausführungen zu vermeiden, damit schon während der Montage zum Schutz der innenliegenden Glasfaserkabel die beiden Rohrenden fixiert werden, und die Verbindung von Rohrenden durch Verbindungsmuffen aus zwei Gehäusehälften zu erleichtern.

Der mit der Erfindung erzielte Vorteil liegt insbesondere in dem Schutz der innenliegenden Glasfaserkabel während der Montage durch das Fixieren der beiden Rohrenden. Außerdem wird die Verbindung von Rohrenden durch die Anordnung von zwei Rohrklammern erheblich erleichtert.

Die Lösung der gestellten Aufgabe Liegt in der Merkmalskombination des Anspruchs 1.

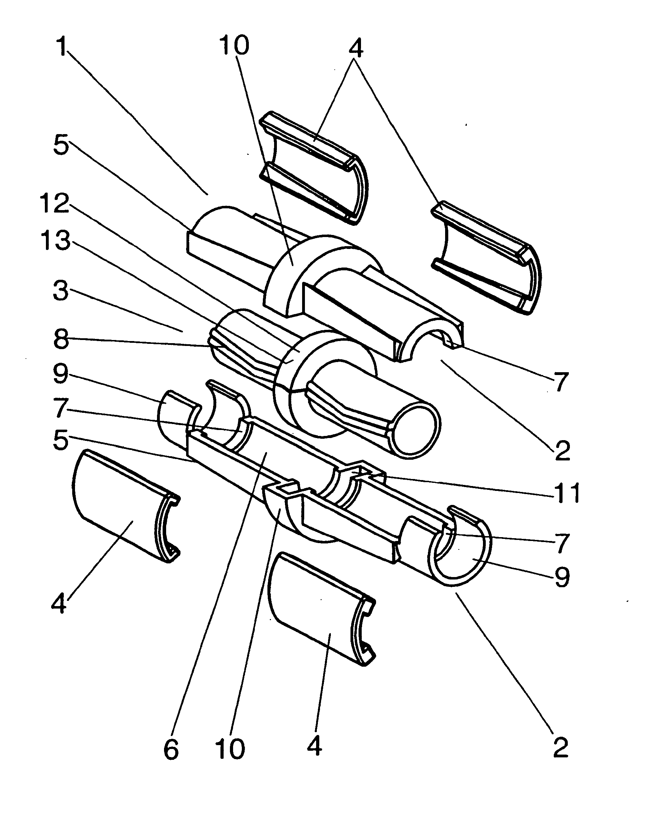

Die Erfindung ist nachstehend anhand eines in der Abbildung dargestellten Ausführungsbeispieles näher erläutert:

In der Abbildung ist eine Explosionsdarstellung der Verbindungsmuffe dargestellt.

Die beiden Gehäusehälften (2) weisen jeweils einen Aufnahmebereich (6) für ein Dichtmittel (3) auf, der durch zwei fest an den Gehäusehälften angeformte ringförmige Abschnitte (7) begrenzt wird.

Im Aufnahmebereich (6) wird zwischen den zu verbindenden Rohren und den Gehäusehälften (2) das Übermaß des Dichtmittels (3) verpresst, die fest angeformten ringförmigen Abschnitte (7) verhindern das Ausweichen des Dichtmittels. Die ringförmigen Abschnitte (7) haben einen Innenquerschnitt der kleiner ist als die Außenabmessungen der zu verbindenden Rohre. Es entsteht eine ringförmige Einschnürung an beiden zu verbindenden Rohren, jeweils etwa im Abstand der halben Länge des Dichtmittels vom Rohrende. Diese Einschnürung der Außenkontur der flexiblen Kunststoffrohre führt zu einer längs-zugfesten Verkrallung ohne den Innenquerschnitt der Rohre spürbar zu beeinflussen.

Außerhalb des Aufnahmebereiches (6) des Dichtmittels sind auf wenigstens einer Gehäusehälfte Rohrklammern (9) ausgebildet. Diese Rohrklammern (9) fixieren die zu verbindenden Rohrenden während der Montage auf einer Gehäusehälfte, während die zweite Gehäusehälfte, zwischen den Rohrklammern geführt, aufgesetzt wird und mit den Verbindungsklammern verpresst. Diese Rohrklammern fixieren schon während der Montage die Rohrenden mit dem innenliegenden Glasfaserkabel, erleichtern die Montage erheblich und justieren die zweite Gehäusehälfte auf der ersten.

Auf wenigstens einer Gehäusehälfte ist mittig eine radial nach außen ragende Erweiterung (10) angebracht. Diese Erweiterung dient beim Aufschieben der Verbindungsklammern (4) als Gegenlager und Anschlag und schafft auf der Innenseite des Gehäuses ohne Schwächung der Wanddicke Raum für eine radial nach außen ragende Erweiterung (11).

In dieser mittigen Erweiterung (11) findet die radial nach außen ragende Erweiterung (12) des Dichtmittels (3) Platz, wodurch dessen mittige Lage in den Gehäusehälften gesichert wird.

Bei Anordnung einer ringförmigen Verengung (13) im Dichtmittel innen, deren Innenquerschnitt kleiner ist als die Abmessung des Rohres und abgestimmt auf das vom Rohr aufzunehmende Kabel ist, kann gleichzeitig mit der gasdichten und zugfesten Verbindung der Rohre ein gasdichter Verschluß zwischen innenliegendem Kabel und Innenquerschnitt des Rohres in Längsrichtung erreicht werden.

Die Anordnung eines Längs-Wulstes des Dichtmittels (3) wenigstens auf einer Seite der Trennungslinie (8) verbessert durch zusätzliches Volumen des Dichtmittels in diesem Bereich den Abdicht-Vorgang.

### Bezugszeichenliste

- (1): Verbindungsmuffe
- (2): Gehäusehälften
- (3): Dichtmittel
- (4): Verbindungsklammern
- (5): Schwalbenschwanz-Führung
- (6): Aufnahmebereich des Dichtmittels in der Gehäusehälfte
- (7): Ringförmiger Abschnitt
- (8): Trennungslinie des Dichtmittels
- (9): Rohrklammer
- (10): Äußere Erweiterung der Gehäusehälften
- (11): Innere Erweiterung der Gehäusehälften
- (12): Äußere Erweiterung des Dichtmittels
- (13): Verengung des Dichtmittels

## Patentansprüche

1. Verbindungsmuffe (1) für Kabelschutzrohre geringen Durchmessers bestehend aus zwei Gehäusehälften (2) innerhalb derer ein Dichtmittel (3) aus elastischem Material angeordnet ist, und die mit Hilfe von Verbindungsklammern (4) auf Schwalbenschwanz-Führungen (5) gegeneinander verspannbar sind **dadurch gekennzeichnet, dass** auf der Innen seite der Gehäuse hälften (2) beidseitig eines Aufnahme bereichs (6) für das Dichtmittel (3) zwei ringförmige Abschnitte (7) als fester Bestandteil der Gehäusehälften (2) ausgebildet sind, dass sich in den Gehäusehälften (2), außerhalb des Aufnahmebereiches (6) des Dichtmittels (3) mindestens ein weiterer, klammerförmiger Abschnitt befindet, dessen Innenquerschnitt etwa der Außenabmessung des aufzunehmenden Rohres entspricht, der zur gegenüberliegenden Gehäusehälfte hin offen ist und als Rohrklammer (9) ausgebildet ist und dass etwa in der Mitte auf der äußeren Oberfläche wenigstens einer Gehäusehälfte (2) eine ringförmig nach außen ragende Erweiterung (10) vorgesehen ist, in wenigstens einer Gehäusehälfte (2) innen eine radial nach außen ragende Erweiterung (11) vorgesehen ist und die ringförmigen Abschnitte (7) einen geringeren Innenquerschnitt aufweisen als die Außenabmessungen der zu verbindenden Rohre, wodurch eine geringfügige Einschnürung der Außenkontur der Rohre entsteht.

2. Verbindungsmuffe (1) für Kabelschutzrohre nach Anspruch 1, **dadurch gekennzeichnet, dass** mindestens die Gehäusehälften (2) der Verbindungsmuffe (1) einstückig aus formbarem Werkstoff wie Kunststoff, gefertigt sind.

3. Verbindungsmuffe (1) für Kabelschutzrohre nach Anspruch 1 oder 2,
**dadurch gekennzeichnet, dass** die Dichtmittel (3) ein oder mehrteilig ausgebildet ist/sind, eine zylindrische Form aufweisen und etwa in der Mitte, eine radial nach außen ragende Erweiterungen (12) aufweisen, welche in die radial nach außen ragende Erweiterung (11) des Gehäuses eingreifen.

4. Verbindungsmuffe (1) für Kabelschutzrohre nach einem der Ansprüche 1 bis 3, der folgenden, **dadurch gekennzeichnet, dass** das ein oder mehrteilige Dichtmittel (3) innen, etwa gegenüber der Erweiterung (12), eine ringförmige Verengung (13) aufweist, deren freier Innenquerschnitt kleiner ist als die Innenabmessung des aufzunehmenden Rohres.

5. Verbindungsmuffe (1) für Kabelschutzrohre nach einem der Ansprüche 1 bis 4, **dadurch gekennzeichnet, dass** zur Verbesserung der Abdichtung zwischen den Gehäusehälften (2) einerseits und einem das Dichtmittel (3) durchlaufenden Kabelschutzrohr andererseits auf dem Dichtmittel (3) entlang einer Trennungslinie (8) mindestens auf einer Seite ein Längs-Wulst angeformt ist.

## Claims

1. Connecting sleeve (1) for cable protection tubes of small diameter consisting of two case halves (2) within which a sealant (3) made of elastic material is located and which can be clamped against each other with the help of connecting clips (4) on dovetail guides (5) **characterised in that** on the inside of the case halves (2) on both sides of a holding area (6) for the sealant (3) two ring-shaped sections (7) are formed as fixed components of the case halves (2), that in the case halves (2), outside the holding area (6) for the sealant (3) there is at least one further clamp-shaped section whose internal cross-section corresponds approximately to the external dimensions of the tube to be accommodated, which is open towards the opposite case half and which is designed as a tube clamp (9), and that approximately in the centre of the external surface of at least one case half (2) a ring-shaped outwards-protruding extension (10) is provided for, in at least the inside of one case half (2) an extension (11) protruding radially outwards is provided for, the ring-shaped sections (7) having a smaller internal cross-section than the external dimensions of the tubes to be connected, giving rise to a slight constriction in the external contour of the tubes.

2. Connecting sleeve (1) for cable protection tubes in accordance with Claim 1, **characterised in that** at least the case halves (2) of the connecting sleeve (1) are produced as one piece from post-forming material such as plastic.

3. Connecting sleeve (1) for cable protection tubes in accordance with Claim 1 or 2, **characterised in that** the sealants (3) are designed to be one-part or multi-part, have a cylindrical shape and that approximately in the centre have an extension (12) which protrudes radially outwards and which engages in the radially outwards-protruding extension (11) of the case.

4. Connecting sleeve (1) for cable protection tubes in accordance with one of the Claims 1 to 3, **characterised in that** the one-part or multi-part sealant (3) has on the inside a ring-shaped constriction (13) which is approximately opposite the extension (12) and whose free internal cross-section is smaller than the internal dimensions of the tube to be accommodated.

5. Connecting sleeve (1) for cable protection tubes in accordance with one of the Claims 1 to 4, **characterised in that** in order to improve the seal between the case halves (2) on the one hand and a cable protection tube running through the sealant (3) on the other hand a longitudinal bead is formed along a separating line (8) on at least one side of the sealant (3).

## Revendications

1. Manchon de raccordement (1) pour gaines de protection de câbles de faible diamètre, constitué de deux demi enveloppes (2) à l'intérieur desquelles est disposé un élément d'étanchéité (3) en matériau élastique et qui peuvent être bridées l'une contre l'autre grâce à des brides de liaison (4) sur des glissières en queue d'aronde (5), **caractérisé en ce que**, sur la face intérieure des demi enveloppes (2), des deux côtés d'une zone d'implantation (6) destinée à l'élément d'étanchéité (3), deux segments circulaires (7) sont prévus attenants aux demi enveloppes (2), **en ce que** dans les demi enveloppes (2), à l'extérieur de la zone d'implantation (6) de l'élément d'étanchéité (3), au moins un autre segment en forme de bride est prévu, dont la section intérieure est approximativement égale à la dimension extérieure de la gaine de protection de câbles correspondante, ledit segment étant ouvert en regard de la demi enveloppe appariée et configuré comme un collier pour tuyaux (9), **en ce qu'**approximativement au milieu de la surface extérieure d'au moins une demi enveloppe (2) une extension (10) de forme circulaire en saillie vers l'extérieur est prévue, **en ce que** dans au moins une demi enveloppe (2), à l'intérieur, une extension (11) radiale en saillie vers l'extérieur est prévue et **en ce que** les segments circulaires (7) présentent une section intérieure inférieure aux dimensions extérieures des gaines de protection de câbles à raccorder, un très faible pincement du profil extérieur des fourreaux étant ainsi obtenu.

2. Manchon de raccordement (1) pour gaines de protection de câbles conformément à la revendication 1, **caractérisé en ce qu'**au moins les demi enveloppes (2) du manchon de raccordement (1) sont réalisées en une seule pièce dans un matériau déformable, tel que le plastique.

3. Manchon de raccordement (1) pour gaines de protection de câbles conformément à la revendication 1 ou 2, **caractérisé en ce que** l'élément d'étanchéité (3) qui est réalisé en une ou plusieurs parties présente une forme cylindrique et comporte, approximativement au milieu, une extension (12) radiale en saillie vers l'extérieur, laquelle s'engage dans l'extension (11) en saillie vers l'extérieur qui est prévue dans l'enveloppe.

4. Manchon de raccordement (1) pour gaines de protection de câbles conformément à l'une des revendications 1 à 3, **caractérisé en ce que** l'élément d'étanchéité (3) réalisé en une ou plusieurs parties présente, à l'intérieur, globalement en face de l'extension (12), un rétrécissement circulaire (13) dont la section intérieure libre est inférieure à la dimension intérieure de la gaine de protection de câbles correspondante.

5. Manchon de raccordement (1) pour gaines de protection de câbles conformément à l'une des revendications 1 à 4, **caractérisé en ce qu'**un bourrelet longitudinal est formé sur l'élément d'étanchéité (3), le long d'une ligne de séparation (8), au moins sur un côté, afin d'améliorer l'étanchéité entre les demi enveloppes (2) d'une part et une gaine de protection de câbles qui traverse l'élément d'étanchéité (3) d'autre part.
